(19) **Europäisches Patentamt**

**European Patent Office**

**Office européen des brevets**

(11) **EP 1 425 963 B1**

(12) **EUROPEAN PATENT SPECIFICATION**

(45) Date of publication and mention
of the grant of the patent:
**08.11.2006 Bulletin 2006/45**

(51) Int Cl.:
*A01K 63/04* (2006.01)

(21) Application number: **03027293.4**

(22) Date of filing: **28.11.2003**

(54) **Decentralized oxygen supply system for aquaculture**

Dezentralisierte Sauerstoffversorgungsanlage für Aquakultur

Système d'alimentation d'oxygène décentralisé destiné à l'aquaculture

(84) Designated Contracting States:
**AT BE BG CH CY CZ DE DK EE ES FI FR GB GR HU IE IT LI LU MC NL PT RO SE SI SK TR**

(30) Priority: **04.12.2002 US 310001**
**24.09.2003 US 669425**

(43) Date of publication of application:
**09.06.2004 Bulletin 2004/24**

(73) Proprietor: **AIR PRODUCTS AND CHEMICALS, INC.**
**Allentown, PA 18195-1501 (US)**

(72) Inventors:
• **Mathur, Ashok N.**
**Allentown**
**PA 18103 (US)**
• **Yankovoy, Michael**
**Wescosville**
**PA 18106 (US)**
• **Ma, Pingping**
**Orefield**
**PA 18069 (US)**
• **He, Xiaoyi**
**Orefield**
**PA 18069 (US)**

(74) Representative: **Kador & Partner**
**Corneliusstrasse 15**
**80469 München (DE)**

(56) References cited:
WO-A-01/87052          GB-A- 942 754
US-A- 5 256 309          US-A- 5 814 229
US-A- 5 893 337

## Description

BACKGROUND OF THE INVENTION

The present invention relates generally to aquaculture farming. More specifically, the invention relates to an oxygen supply system for aquacultural farming of marine animals.

Through history, marine animals such as shrimp, fish, and other species, have been captured in the wild. As demand for marine animals have grown and the wild catch has reached its limitations, an alternative supply source for marine animals referred to as aquacultural farming, or aquaculture, was developed. Aquaculture is the culture and farming of marine animals such as fish or shellfish.

One of the more popular, as well as the most highly demanded, marine animals to be produced via aquaculture is shrimp. Aquaculture of shrimp or other marine animals can be considered extensive, semi-intensive, or intensive. Extensive aquaculture facilities provide little or nor control over the environment, i.e., placing animals within a site and allowing them to grow on their own or trapping the animals in special enclosures and holding them until they reach market size. Intensive aquaculture facilities, on the other hand, provide full control the environment such as temperature, salinity, flow rate, feed type, amount of feed, and light. Semi-intensive aquaculture facilities are a hybrid of extensive and intensive operations.

Initial attempts at aquaculture of shrimp were relatively simple and were considered extensive facilities. Ocean water was pumped into large containment vessels referred to as ponds in intercostal or low-lying areas. Shrimp were placed in these ponds and after a certain period of time were harvested. The harvest yields at first were quite low. Due to increasing demand for marine animals, however, the need for higher yields and more productive processes grew. In order to achieve higher yields, the stocking density of the marine animals within the ponds, measured in terms of pounds of marine animal per gallon of water, needed to be increased.

As stocking densities within the pond increase, oxygen depletion can become an issue. Marine animals like shrimp require oxygen to grow and maintain health. The dissolved oxygen content of the water within the pond is one of the most important parameters of the water quality since oxygen is a vital condition for all marine animals living in the water and having an aerobic type of respiration. The solubility of oxygen within the water is influenced by several factors such as, but not limited to, atmospheric pressure, hydrostatic pressure, pond contaminants such as algae or bacteria, and temperature. To be safe, the dissolved oxygen content of the water should be maintained above 3 mg/l and below about 15 mg/l to avoid stressing or killing the marine animals contained wherein.

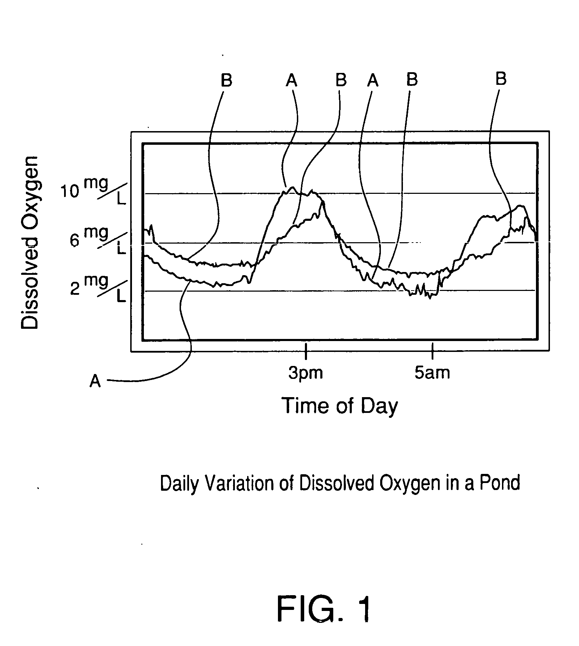

The dissolved oxygen content of water normally fluctuates over a 24-hour period. Line A in FIG. 1 provides a graph that shows the hourly fluctuations of the percentage of dissolved oxygen in a one-day time period within a typical shrimp pond using continuously running air based aeration devices. Diurnal changes of the dissolved oxygen content during a time period (t'' - t') can be expressed by the following equation (1):

$$O_2'' - O_2' = P - R - Y \pm A \quad (1)$$

where P is the quantity of oxygen produced during the photosynthetic process of the phytoplankton, the phytobenthos, and the water plants; R = quantity of oxygen consumed during the respiration of bacterial-, phyto- and zooplankton and organisms of animals and plants; Y = quantity of oxygen fixed by the mud of the pond bottom; and A = quantity of oxygen dissolved from the atmosphere, or in case of supersaturation, released to the atmosphere.

Referring to equation (1), the most influential factor on the dissolved oxygen content, P, is dependent upon light conditions because photosynthesis can only occur via utilization of solar energy. During the daylight hours, photosynthesis starts gradually from the early morning hours and increases the dissolved oxygen content of the water. The maximum value of the dissolved oxygen content can be observed early in the afternoon. Oxygen levels are usually adequate to meet the needs of the marine organisms within the pond as algae and other organisms release oxygen during the photosynthesis process. From the late afternoon hours, however, photosynthesis is rapidly decreasing and ceases after dark in absence of sunlight. In addition, plants and/or other organisms respirate during night hours and may further decrease the dissolved oxygen content. Thus, supplemental oxygen or aeration may be required because the level of dissolved oxygen can fall below the lethal oxygen level for marine animals. Lethal oxygen level is the dissolved oxygen content that cannot be tolerated by the given marine animal within a pond for a given period of time.

In addition to need for supplemental oxygen due to diurnal changes, supplemental oxygen may be needed when the oxygen consumption rate becomes greater than the available oxygen within the water supply. The oxygen consumption of a marine animal can significantly change at a given water temperature depending on the activity of animal and may be related to the oxygen saturation of the water. The oxygen consumption rate of marine animals may more than double, for example, during feeding periods. It is believed that increasing the dissolved oxygen content within the water may increase the feed consumption rate of marine animals. Consequently, increasing the feed rate may increase the growth rate. U.S. Pat. No. 5,893,337 describes a process for optimizing the growth of fish reared in a pond by injecting oxygen in a controlled quantity before feeding the fish.

A decrease in dissolved oxygen content may cause stress, and ultimately death, to the marine animals. In addition to changing the body to one that starts using energy, rather than storing it, stress may suppress the immune system thereby putting the animal at a greater risk of disease. It is believed that marine animals can sense a decrease of dissolved oxygen content of the water before it causes trouble to its respiration and may search for water of higher oxygen content. However, unlike food, it is believed that marine animals cannot sense or detect those areas of higher oxygen within the water from a distance. If this random search for oxygen is unsuccessful and the dissolved oxygen content of the water decreases further, the respiratory motion of the marine animal may increase as long as the oxygen supply to respiratory muscles permits. This can reach a limit whereby further acceleration is hindered by lack of oxygen. Marine animals are tolerant until this level. If the dissolved oxygen content of the water decreases further, the pulsation of the heart slows down and the animal dies after a time depending on the resistance characteristic of the individual species.

Industry, up to a point, has been able to address the issues of oxygen depletion and supplemental oxygen through a variety of measures such as aeration devices. Aeration devices typically mechanically agitate the surface water causing oxygen to diffuse into the water as air and water mix. Examples of these devices include paddlewheels, gravity aerators, u-tubes, venturi aerators, surface aerators, or bubble diffusers (e.g., fine, medium, or coarse bubble diffusers). The efficiency of the aeration device is determined by the amount of surface area interface between the water and air and the energy required to produce that interface. Since aerators inject air, the amount of oxygen that can be dissolved in water is limited by the concentration of oxygen in the air (21%). Options to increase the amount of dissolved oxygen in the water with air are, therefore, somewhat limited. Further, due to the demand for higher productivity and stocking densities in intensive aquacultural facilities, the natural oxygen supply from air becomes increasingly insufficient and may be the limiting factor in production. W01/87052 relates to a device for oxygenating water in aqua-culture plants for marine organisms in the sea.

Another solution to add oxygen to the water is through the transport of high purity oxygen in the form of liquid oxygen. This approach overcomes the limitation of using air as the oxygen source. The significant advantage of applying high purity oxygen is the high mass transfer rate between pure oxygen and water due to the differences in concentration. Further, increasing the dissolved oxygen content may allow one to achieve higher stocking densities. However, the logistics of transporting liquid oxygen to the farms and the distribution to individual ponds has proven to be not cost effective -and in some cases impossible- due to typical aquaculture farm infrastructure. For instance, typical shrimp farms are comprised of a large number of large, approximately 1 hectare, dirt ponds separated by narrow, weak levies. These levies are used as a means of transporting equipment, feed, and other supplies to the ponds. Since many of these farms are in intercostal areas, the ability to install oxygen lines in such conditions is limited. Even if the liquid oxygen plant was close to the farm, which can minimize the oxygen production, and delivery costs, this approach may not be practical due to the high capital costs involved in installing and maintaining the piping infrastructure. Further, larger, single on-site oxygen production and pipeline distribution system face the same logistical and infrastructure problems as liquid oxygen piping systems.

Due to its high cost, high purity oxygen has not gained acceptance in aquaculture settings despite its many benefits. At the present time, mechanical aerators continue to be the industry choice in providing supplemental oxygen. As a result, the ability to further increase pond stocking densities is limited.

Besides oxygen, there is a need for improved feed and feeding techniques in aquaculture farms in order to maintain or increase stocking density. The need for supplying large amounts of feed at regular and frequent intervals to the pond usually requires large on-site feed storage facilities, using intensive manual labor to drop the feed manually by hand and/or using expensive truck-mounted blowers. Feed is often distributed manually throughout the pond by walking or boating in the pond. The blowers are another means of distributing the feed around the periphery of the ponds. This feeding process is relatively inefficient because the marine animals may consume only a fraction of feed. Manually distributing the feed is labor intensive and distributes the feed unevenly and only in selected parts of the pond. In blower feed, part of the feed may be blown away from the pond or may be eaten by birds. The dimensions of the pond may also effect feeding efficiency. For example, a blower-type feeder throws feed about 30 meters and it lands in a band about 5 meters wide so that the center of a large square pond would not receive much feed. Additionally, it has a high operating cost in terms of manpower, equipment, and fuel.

In addition to food and oxygen, aquaculture farms also need to periodically add feed chemicals, medicine, vitamins and other additives to the containment vessel or pond. Chemicals, such as ozone, may be added to manage the pond water quality. Medicines may be added to protect the marine animals against disease. Vitamins may be added to improve the health and appearance of the animals. Other additives such as fertilizers, chemicals, or carbon sources (such as molasses) may be added for algae and bacteria control. The addition of these additives to the containment vessel presents a challenge in terms of rapid and even distribution as well as the labor effort.

Due to the relative inefficiencies and high costs in delivering oxygen, feed, medicine, and other additives to the pond, there is a need in the art to provide a system that would optimize the oxygen, feed, and chemical needs within an aquaculture facility. There is a further need to provide an automated, or semi-automated system, that can provide real-time feedback as to the various production needs of the pond and a distribution system to supply same. Such a system may significantly reduce cost and improve pond productivity. In some instances, such as when the dissolved oxygen content of the pond water falls below lethal levels, there is a need to provide a reliable, fail-safe system that alerts the user and supplies oxygen to the containment vessel to a level above the lethal level.

BRIEF SUMMARY OF THE INVENTION

The present invention satisfies one, if not all, of the needs of the art by providing a system for providing oxygen, preferably having a purity level by volume of 30% or greater, preferably 50% or greater, more preferably 60% or greater, for the aquafarming of marine animals. According to claim 1 there is a system for providing oxygen having a purity of 30% or greater, for the aquaculture of marine animals comprising: 20-1000 containment vessels capable of containing a plurality of marine animals and an aqueous medium; a plurality of oxygen injectors, at least one oxygen injector disposed in at least one location of each of said containment vessels; and a plurality of oxygen generators of said gas, wherein the number of said containment vessels are between 0.25 and 8 times the number of oxygen generators in the system; each of said plurality of oxygen generators are in fluid communication with at least one oxygen injector whereby the plurality of oxygen generators provides the containment vessels with an amount of oxygen sufficient to increase the percentage of dissolved oxygen within the aqueous medium ; wherein said oxygen generators are located proximally to said containment vessels or are disposed within the containment vessel they provide oxygen to.

In a further aspect of the present invention, there is provided a system for controlling the supply of oxygen within a containment vessel for the farming of marine animals comprising: 20 - 1000 containment vessels, each of said containment vessels capable of containing a plurality of marine animals, and an aqueous medium, a plurality of sensors for measuring the content of dissolved oxygen $C_O$ within the aqueous medium, a plurality of oxygen injectors, at least one oxygen injector is disposed within at least one location of each of said containment vessels; a plurality of oxygen generators each of said oxygen generators is in fluid communication with at least one of said oxygen injectors wherein said oxygen generators provide the containment vessels with an amount of oxygen sufficient to increase the amount of dissolved oxygen within the aqueous medium above the oxygen content $C_O$; and a central processing unit in electrical communication with the sensors and at least one oxygen generator wherein the central processing unit compares the oxygen content $C_o$ against a set point value $C_{set}$ and activates the at least one oxygen generator when the oxygen content $C_o$ is below set point value $C_{set}$. In an actual field test, as shown in FIG 1, this system was used to sense when the dissolved oxygen levels were low and to activate the oxygen generator to introduce oxygen via the oxygen injectors into the pond when the level of dissolved oxygen fell below 4 milligram/liter (mg/l), and the oxygen generator was shut off when the dissolved oxygen was above 6 mg/l. The results of the the field test and the variation in the dissolved oxygen during the day is shown as Line B in FIG. 1. By using the system of this invention the amount of dissolved oxygen was maintained at a more even level throughout a twenty-four hour period using less energy than if the prior art mechanical aeration devices were run continuously. The inventors determined that it is more efficient and necessary for the maintenance of the desired dissolved oxygen levels to add more oxygen to the pond at night than during the day.

These and other aspects of the invention will become apparent from the following detailed description.

BRIEF DESCRIPTION OF SEVERAL VIEWS OF THE DRAWINGS

FIG. 1 provides a graph that shows the hourly fluctuations of the percentage of dissolved oxygen in a one-day time period within a typical shrimp pond.

FIG. 2 provides an illustration of an embodiment of the system of the present invention.

FIG. 3 provides an illustration of an embodiment of the invention comprising a portable oxygen generator and a monitoring system of this invention.

FIG. 4 provides a cross-sectional view of a containment vessel and a floating oxygen generator useful in a system of this invention.

FIG. 5 provides a top view of the flow patterns within a containment vessel.

FIG. 6 provides a top view of the flow patterns within a containment vessel.

DETAILED DESCRIPTION OF THE INVENTION

The present invention provides a system for delivering gas comprising oxygen, preferably having a purity of 30% or greater via a plurality of oxygen generators located in the proximity of the containment vessels, in a decentralized fashion in an aquaculture facility. Previous methods of delivering oxygen, such as the delivery of liquid oxygen, do not address the cost effectiveness issues or the infrastructure limitations of aquacultural facilities, which have up to the present time, made high purity oxygen injection impractical. Further, having only aeration devices that are limited by the oxygen content of air providing oxygen to a containment vessel is less efficient. This may limit the amount of marine animals that can be raised in a given pond thereby limiting productivity increases. Further, aquacultural facilities today practice inefficient methods of injecting feed and other additives to the water. The present invention provides a fail-safe method for providing oxygen, along with feed or other additives, to the water within the containment vessel.

The term "fluid" as used herein relates to a flowing fluid composed of a gas, liquid, suspended solids, or combinations thereof.

The term "pond" or "containment vessel" as used herein relates to not only natural or man-made outdoor pond, but also tanks constructed of metal, plastic, concrete, and the like.

The term "aeration device" includes devices that inject air or gases having a higher concentration of oxygen than air into the water of a containment vessel, including the oxygen generators and oxygen injectors of this invention, and mechanically agitators of the surface water that cause oxygen to diffuse into the water as air and water mix. Examples of mechanical agitators include paddlewheels, gravity aerators, u-tubes, venturi aerators, surface aerators, or bubble diffusers (e.g., fine, medium, or coarse bubble diffusers).

The present invention provides a system, which provides a means of producing and distributing oxygen via a gas comprising oxygen to one or more containment vessels in a decentralized fashion. The gas preferably is at least 30% by volume oxygen preferably at least 50%, more preferably at least 60% by volume oxygen, and the residue of the gas if any, may comprise mostly nitrogen. As a result of providing oxygen to the containment vessels using the system or method of the present invention, the dissolved oxygen content for a given containment vessel may be kept and managed within a range of from about 2 mg/l to about 15 mg/l, or more preferably from 4 mg/l to about 12 mg/l.

One advantage of the system of the present invention is that it may allow one to improve the stocking density of the containment vessel relative to other prior-art containment vessels using only air-based mechanical systems. As mentioned previously, stocking density is the weight or number of marine animals held per unit area or volume. Stocking densities may depend on the species of the marine animals and the animals' tolerance to the stress of increased overcrowding. Crustacean species such as shrimp, for example, may begin to fight amongst each other leading to the loss of limbs and reduction in market value if over stocked. Other species of marine animal such as finfish may bite or nip each other on the fins or eyes if overstocked. It has been established that higher stocking densities can be tolerated by the marine animals if other stressors such as low dissolved oxygen, poor diet, etc. are eliminated. Thus, the system of the present invention -by reducing the stress upon marine animals via improvement in the provision of oxygen and/or aspects of the aquacultural environment (e.g., cleanliness, food, chemical, and other additives)- can achieve efficient production at stocking densities of 25

animals per $m^3$ or greater, preferably 50 animals per $m^3$ or greater, and more preferably 100 animals per $m^3$ or greater. In certain preferred embodiments such as semi-intensive or intensive aquacultural facilities for the production of shrimp, the system may allow efficient production at shrimp harvest biomass densities of 0.5 $kg/m^2$ or greater, preferably 1.2 $kg/m^2$ or greater, and most preferably 2.5 $kg/m^2$ or greater. The biomass density is a measure of the weight of the harvest shrimps per surface area of the pond. Thus, relatively higher dissolved oxygen levels may allow one to increase the stocking density of the pond.

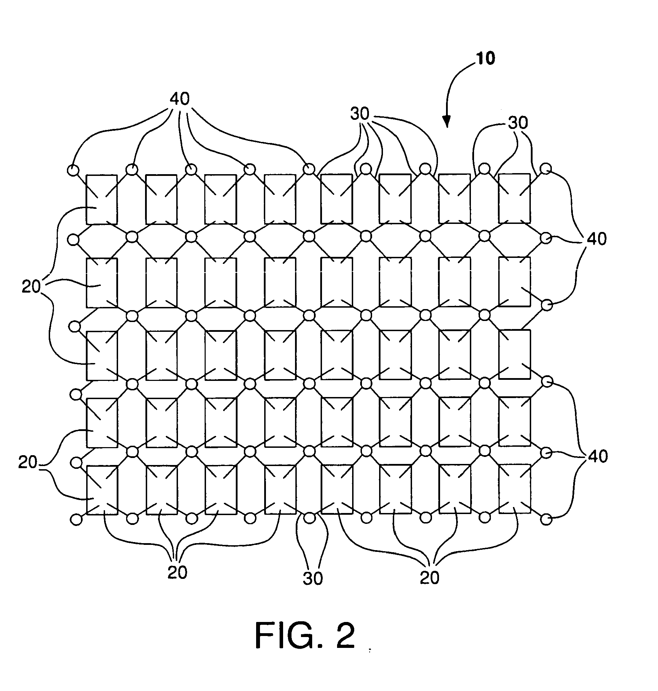

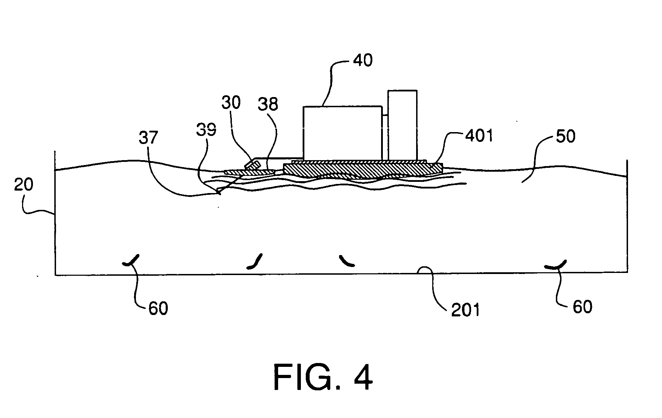

FIG. 2 provides one example of an embodiment of the system of the present invention. Referring to FIG. 2, the system 10 is comprised of the following elements: containment vessels 20, a plurality of oxygen injectors 30, and a plurality of oxygen generators 40. Containment vessel 20 houses a plurality of marine animals 60 within an aqueous medium 50, preferably fresh or salt water depending upon the species of marine animals. (The marine animals 60, and the aqueous medium 50 are shown in the containment vessel 20 shown in Figure 4.) Oxygen generators 40 produce oxygen and are in fluid communication with oxygen injectors 30 to distribute oxygen to one or more locations within containment vessels 20. As FIG. 2 illustrates, a plurality of oxygen generators 40 are located throughout system 10 in such a way to provide a primary, as well as a secondary or "back-up" supply, to other containment vessels in the event of failure of one or more other oxygen injectors 30 and/or oxygen generators 40 within the system.

Referring again to FIG. 2, each containment vessel 20 within system 10 is depicted as receiving oxygen from at least four different oxygen injectors 30 and/or oxygen generators 40. The exact location, size, and number of the oxygen injectors and/or generators will vary depending on such factors as system layout, the production capacity of the oxygen generators, the number and size of the containment vessels, and the desired stocking density. Each oxygen injector 30 and oxygen generator 40 can be turned on or off anywhere within system 10 depending on the demand for dissolved oxygen in the individual containment vessel 20 or within certain areas of the individual containment vessel 20. In one embodiment, particularly for large ponds, several oxygen generators having one or more oxygen injectors could be located in various locations around or floating in the pond; each oxygen generator could be individually controlled to provide oxygen as needed to the areas of the containment vessel into which one or more oxygen injectors of the oxygen generator are located. There may be fewer or more oxygen generators than number of ponds in the aquafarm system. It is preferred that the number of ponds in the system is between 0.25 and 8 times the number of oxygen generators in the system. Typically the systems of this invention will consist of from 20 to more than 1,000 ponds. The oxygen generators each have at least one oxygen injector in fluid communication with the oxygen generator.

Containment vessel 20 may be any vessel that is capable of containing a plurality of marine animals within an aqueous medium such as fresh or salt water. Depending upon the aquacultural facility, containment vessel 20 may be, but is not limited to, raceway, recirculation tanks, canal, pond, or caged areas within an intercostal area. Containment vessel 20 may be located in either an indoor or outdoor aquacultural facility. The volume of the containment vessel may range from a few hundred to a few thousand gallons. In certain embodiments wherein the containment vessel is a pond, the size of the pond may range from 1 hectare or below (from 0.1 to 1 hectacre) for intensive aquaculture facilities, from 1 to 2 hectare for semi-intensive aquaculture facilities, and 5 hectare or greater for extensive aquaculture facilities. The annual production level, measured in kilogram of marine animal per hectare per harvest, for the intensive, semi-intensive, and extensive aquaculture facilities varies from 5,000 or greater, between 1000 to 5,000, and between 100 to 1,000, respectively.

Referring again to FIG. 2, oxygen injector 30 preferably is located within close proximity to one or more containment vessels. Oxygen injector 30 may also be located within the containment vessel itself such as at one or more sidewalls of the vessel, disposed along the bottom of the containment vessel, or floating along the surface of the containment vessel. It is preferable that in the event that more than one oxygen injector supplies the containment vessel, the oxygen injectors are located complementary with respect to the other's location around or within the containment vessel to ensure a uniform and even distribution of oxygen and other vessel additives (i.e., food, medicine, vitamins, etc.). The placement of the oxygen injectors may be determined via computer simulation of the fluid dynamics within the vessel. In this manner, a relatively even and uniform distribution of oxygen and other vessel additives can be obtained.

In certain preferred embodiments of the present invention, the location of oxygen injectors 30 should be located to minimize stratification, or the separation of different "layers" of the aqueous medium by distinct boundaries, within containment vessel 20 which can have adverse effects on the marine animals contained therein. One or more oxygen injectors 30 can be placed near or at the bottom of the containment vessel to provide sufficient water movement and minimize the occurrence of stratification.

Oxygen injector 30 may consist of a variety of different types such as aspirator, venturi, bubble diffuser, U-tube, pipeline which preferably contains one or more perforations, column, bicone, or any other injection means. In certain embodiments, oxygen injector 30 and oxygen generator 40 may be integrated into one device such as an oxygen generator with a fixed or flexible attached pipe, diffuser, or the like. It is preferable that oxygen injector 30 is designed to increase the contact surface area, and that the angle or location of the oxygen injector in the pond also increases the contact time between the oxygen and the aqueous medium thereby allowing more oxygen to dissolve into the aqueous medium.

In certain embodiments, the oxygen injector may be a venturi. Briefly, a venturi is a device that operates by drawing one fluid media into another using the velocity of the second fluid media (caused by a pressure differential) as the energy source. As the water passes through a restriction in a pipe, it forms a vacuum at the end of the restriction. A hole bored into the pipe at the point where this vacuum occurs may cause air (or any other fluid) to be drawn into the main flow. The amount of fluid drawn in is a direct function of the difference in pressure between the venturi intake and the outlet, and the size of the restriction between them. An example of a venturi oxygen injector suitable for use in the system of the present invention is provided in U. S. Pat. No. 5,863,128.

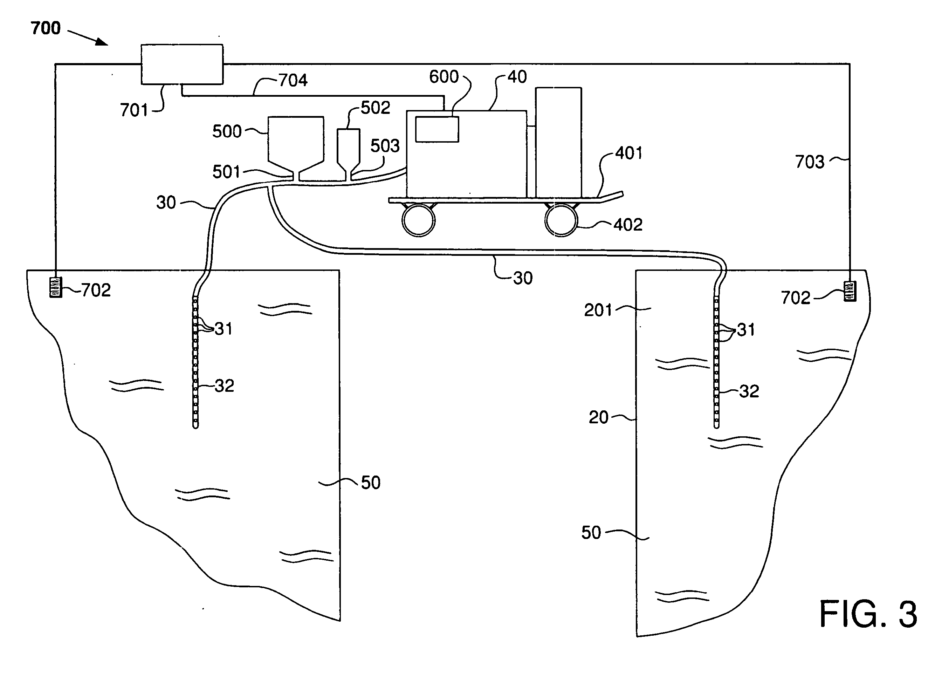

As mentioned previously, oxygen generator 40 is in fluid communication with one or more oxygen injectors 30 to supply one or more containment vessels 20. Oxygen generator preferably produces oxygen via adsorption techniques such as vacuum swing adsorption (VSA) or pressure swing adsorption (PSA) that removes the nitrogen from the air by a molecule filter. In certain preferred embodiments, oxygen generator 40 may be a VSA-based device such as VSA generator model number A150L manufactured by Air Products and Chemicals, Inc. of Allentown, PA the assignee of the present invention. Oxygen generator 40 is preferably a portable unit that can be relocated throughout system 10 and attached to one or more oxygen injectors 30 at any time. The oxygen generator may be mounted on a movable platform that can be, for example, moved around the periphery of the containment vessels or mounted on a floatable skid and disposed upon the surface of the containment vessel. Figure 3 shows oxygen generator 40 on a cart 401 having wheels 402 located adjacent to ponds 20 and providing oxygen to the aqueous medium 50 in the ponds 20 via oxygen injectors 30. The oxygen injectors 30 are located at the bottom 201 of the ponds 20. The oxygen injectors 30 are provided with holes 31 for a portion 32 of oxygen injectors 30 at the bottom 201 of the ponds 20. The oxygen injectors 30 can be made of flexible movable pipe.

Figure 4 shows an oxygen generator 40 mounted on floatable platform 401 floating on the aqueous medium 50 in containment vessels 20. Marine animals 60 are in the containment vessel 20. The oxygen injector 30 shown connected to the oxygen generator 40 has a propeller 39, and a center pipe 37 in which there is an opening (not shown) at its lowermost portion. The center pipe is in fluid communication with the oxygen generator 40. The gas comprising oxygen is injected into the aqueous medium via the opening in the center pipe 37, and the movement of the propeller 39 helps the diffusion of the oxygen into the water by increasing the surface area of the oxygen in contact with the water. The oxygen injector 30 additionally has a floatable platform 38. Alternatively, any of the injectors that were described earlier could be used with the oxygen generator shown in Figure 4 to inject the oxygenated gas into the water. The oxygen generator 40 shown in Fig 4 may move about the pond or it may be anchored via an anchor (not shown) to a stationary object within or outside of the pond to hold the oxygen generator 40 in a single location, while the propeller 39 causes the aqueous medium 50 to move.

In contrast to hard-plumbed liquid oxygen systems, the oxygen generators 40 are portable and may provide high purity oxygen to any of the containment vessels within system 10 on an as-needed basis. Depending upon its size, the unit capacity of each individual oxygen generator 40 may range from 5 l/min to 5000 l/min of oxygen. As with the oxygen injectors, the number and capacity of the oxygen generators may vary depending upon the system requirements. In certain embodiments, VSA oxygen generators may produce oxygen at a relatively low pressure, e.g., 0.21 to 0.34 bar (3 to 5 psi) thereby making them compatible when used to supply low pressure oxygen injectors such as aspirator, venturi, or bubble oxygen injectors. If, however, a higher gas pressure is needed within the system, a booster compressor may be added to the output of the oxygen generator to increase the pressure supplying the oxygen injector.

The system of the present invention may be used in conjunction with other aquacultural systems such as, but not limited to, recirculation water treatment systems or aeration systems (i.e., paddle wheel aerators, large volume pumps, etc.). If sufficient water movement can be provided by other systems or means including other aeration devices in a containment vessel or by the oxygen injector alone, then only one oxygen injector present in a containment vessel may be necessary to maintain the dissolved oxygen at a sufficient level to maintain the health of the marine animals.

In certain embodiments of the present invention, the system may dispense feed during at least a portion, or simultaneously with, the oxygen introduction into the containment vessel. Alternatively, feed may be added before or after the oxygen is introduced into the containment vessel by the system. In these embodiments, feed storage bins 500 as shown in Fig 3 are in fluid communication with the one or more oxygen injectors via connection 501. The feed is added to the oxygen gas stream or the oxygenated water stream for continual and even feed distribution. Since the oxygen system is operational at most times, feed can be added to the pond on an "as-needed" basis and in appropriate quantities. The marine animals can sense and are attracted to the feed while being drawn to the areas having higher dissolved oxygen within the aqueous medium. As a result, the marine animals may consume higher amounts of dissolved oxygen while consuming the feed. It has been established in references such as *Water Quality in Ponds for Aquaculture*, Boyd, C. E. (1990), pp. 304-309, that higher dissolved oxygen levels may improve feed consumption and lower the feed conversion ratio (e.g., the kg (lbs) of feed consumed per kg (lbs) of animal) and consequently raise the growth rate while loweing the feed cost. In embodiments wherein the marine animal comprises shrimp, it is desirable that the growth rate be approximately 0.8 to 2.0 gram per week for a 16-24 week production cycle.

The system of the present invention may also facilitate the introduction of chemicals such as ozone, medicines, vitamins, and/or other additives to the containment vessel by co- injecting these additives with the oxygen gas stream or the oxygenated water stream. Medicines, vitamins and other pond additives may be added via hopper 502 and connection 503 in the oxygen injectors 30. This allows for distribution of these additives using the system installed already for oxygen and incurs no additional equipment or labor cost. The supply vessels for these additives are in fluid communication with the oxygen injectors. These materials can be added to the pond at any desired time and in as much quantity as needed through the oxygen injectors. In embodiments wherein the system may supply ozone in addition to oxygen through the oxygen injectors, the ozone generator may be in fluid communication with the oxygen generator to supply oxygen rather than air to the ozone generator that can be converted to ozone. The ozone may then be dispensed through the oxygen injector(s). Fig 3 shows ozone generator 600 incorporated into the oxygen generator 40.

In certain preferred embodiments of the present invention, the system further comprises a monitoring system. The monitoring system may provide the user with certain information, preferably on a real-time basis, on various production parameters, such as temperature, dissolved oxygen, pH, ammonia, nitrates, nitrites, suspended solids, salinity, alkalinity, biochemical oxygen demand (BOD), hardness, turbidity, and water flow rate, within each containment vessel. The monitoring system may use this information to activate a variety of different supply sources such as oxygen, feed, medicine, or other additives, on automatic basis. One embodiment of the monitoring system 700 as part of the system of this invention is shown in Fig 3. The monitoring system 700 preferably consists of a central processing unit 701 that is in electrical communication via direct means, shown as a wire 703 in Fig 3, with one or more sensors 702 and the oxygen generator 40. Alternatively, the central processing unit 701 could be in communication with the sensor and/or the oxygen generator via a modem, radio, telecommunication or similar means. Alternatively or additionally, although not shown, the monitoring system could also be in electrical communication with various supply sources such as feed hoppers, ozone generator, oxygen injectors, recirculation tank valves, medicine or other additive sources, and the like. Examples of a suitable central processing units include, but are not limited to, signal processors, process controllers, microprocessors, computers, or similar devices capable of retaining certain pre-programmed information into memory and performing a variety of functions such as simple algorithms, relaying data, and executing operations.

The sensors may measure dissolved oxygen levels, temperature, pH, and other water parameters that are in electrical communication with a central processing unit. These parameters would be fed into a central processing unit, which would direct the system elements to provide the necessary injection of oxygen and other materials to the containment vessel in the appropriate quantities. Further, the central processing unit compares these parameters against a number of preset values to determine what each containment vessel needs at any given time. For example, the sensor 702 can be a sensor that measures the dissolved oxygen in the aqueous medium and the central processing unit 701 may compare the measured oxygen content $C_o$ of the aqueous medium within the containment vessel against a pre-programmed set point value $C_{set}$ and may activate the oxygen generator when the oxygen content $C_o$ of the aqueous medium is below set point value $C_{set}$. Additionally, the central processing unit 701 may compare the measured oxygen content $C_o$ of the aqueous medium within the containment vessel against a second pre-programmed set point value $C_{max}$ and may deactivate the oxygen generator when the oxygen content $C_o$ of the aqueous medium is above set point value $C_{max}$. The set point values $C_{set}$ and $C_{max}$ may vary within each containment vessel due to a variety of factors such as, but not limited to, time of day, size or growth of the marine animals, time of growth cycle, time of year, size of the containment vessel, water quality, etc. Despite these variations, the system of the present invention allows the user to manage a plurality of containment vessels independently. Additionally, although not shown in Fig. 3, the oxygen generator 40 may be supplied with means, e.g. valves, to provide oxygen to only one or less than all of the containment vessels to which it supplies oxygen.

In certain preferred embodiments, the central processing unit is an analog-based device. Unlike a digital-based device that can only instruct another to be "on" or "off", an analog device can instruct another device to be at a variety of other states between "on" and "off". For example, an analog signal can regulate the speed of the device (e.g. 20%, 30%, 40% of full operational capacity etc). Analog signals are increasingly being used for dosing functions using the feedback from a sensor. For example, an output from an oxygen sensor may tell the central processing unit that the oxygen concentration is decreasing in the containment vessel. The central processing unit may send an analog signal to partially open or close the valve to the oxygen injector, in an effort to maintain a steady oxygen concentration at all times. This is more preferable than having just an open or closed valve (such as from a digital signal), as this may cause peaks and troughs of oxygen concentration, which can stress the animals.

In certain embodiments of the present invention, the system may also monitor and regulate the saline content of the aqueous medium or water within the containment vessel. Regulation of the saline content is important because variations in salinity can cause stress and acute or chronic mortalities amongst marine animals. The system can incorporate, for example, a hydrometer or refractometer that is in electrical communication with the central processing unit. The refractometer may detect if the salinity level of the water within the containment vessel to determine it has increased, for example, due to evaporation. The refractometer can communicate with the central processing unit that can direct a valve to open thereby allowing additional, saline or fresh water into the containment vessel to increase or decrease the salinity level.

In still a further embodiment of the present invention, the system may also monitor and regulate the ammonia content within the aqueous medium or water of the containment vessel. The main source of ammonia is the waste generated by the marine animals themselves. If the level of ammonia within the aqueous medium is too high, it may be toxic to the marine animals contained therein. Bacteria within the water of the containment vessel consume ammonia thereby lowering the ammonia level. The consumption of ammonia by the bacteria may be aided by adding a carbon source such as molasses to the water. Further, bacteria also benefit from an increased level of dissolved oxygen within the water. In these embodiments, the system may comprise an ammonia sensor to detect the level of ammonia within the water and communicate this information to the central processing unit. If the bacteria fail to keep the ammonia level in a certain range, the central processing unit may direct a valve to allow for molasses or other carbon source to be added to the water to increase the consumption of ammonia.

Although the invention is particularly suitable for a fail-safe system and a method comprising for providing oxygen to containment vessels used in aquaculture, the invention is not limited thereto. The system and method of the present invention can be used for a variety of other applications wherein it is important to provide a reliable source of oxygen such as, for example, wastewater treatment plants or other applications.

By using a computer modeling program the movement of fluid within the containment vessel and the dissolution of oxygen can be optimized. The location and types of aeration devices can be moved around and changed. Different aeration devices can be used in different combinations to achieve the desired results. The oxygen generators and oxygen injectors of this invention can be used with prior art aeration devices to achieve the desired movement of fluid and oxygenation. The movement of the fluid relative to the upfront and operating costs of the devices can be compared to provide the most economical fluid movement.

The movement of water is important to prevent areas of the containment vessel from having low levels of dissolved oxygen. To maximize the distribution of the amount of dissolved oxygen, it is preferred that all the water in the pond is moving at at least 4 cm/sec; however, because of the shape of most containment vessels, it is preferred that at least a majority of the volume of the fluid in the vessel moves at at least 4 cm/sec, preferably between from 4 to 20 cm/sec and more preferably between from 4 to 10 cm/sec. In more preferred embodiments greater than 80%, more preferably greater than 85%, of the volume of the fluid in the pond moves at between from 4 to 20 cm/sec, more preferably between from 4 to 10 cm/sec.

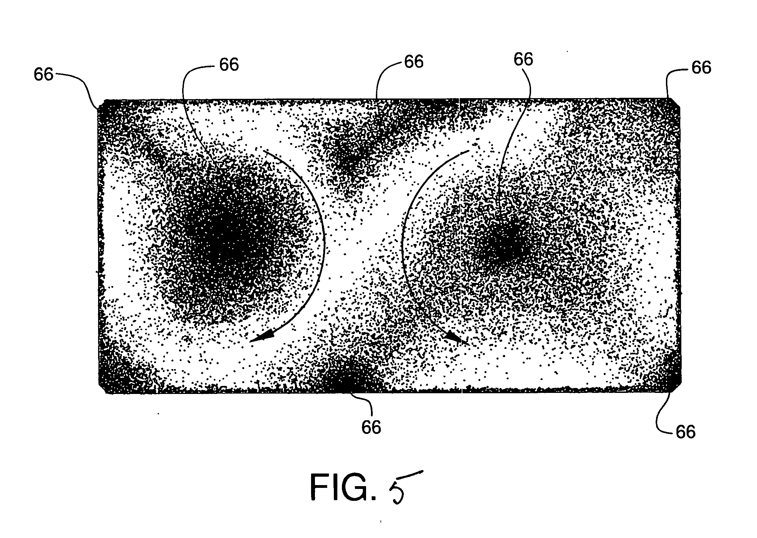

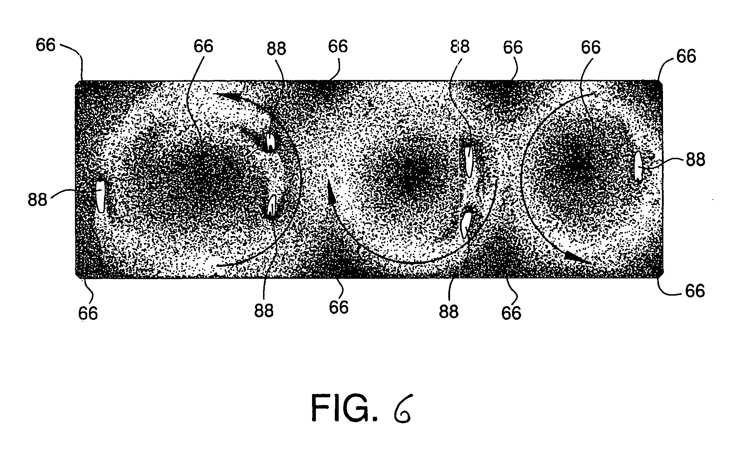

It has been determined that for best results, the aqueous medium in the containment vessels of any shape should move in at least one circular vortex comprising the movement of at least a majority of said aqueous medium in at least one circular vortex, and if there are more than one circular vortexes within the containment vessels, then the vortexes should be complemetary circular vortexes. For circular-shaped containment vessels or square-shaped containment vessels where the length and width are within the ratio of less than 1.5 to 1, it is preferred to have the injectors inject the oxygen/air across the radius or half the length of the vessel, and the flow of the fluid to be in single circular vortex. Preferably the injection across the radius or half the length of the vessel is uniform, if possible. It has been determined that for most ponds having a length that is between 1.5 and 2.4 times the width (for example, rectangular ponds), it is preferred to have the fluid moved by at least 2 sets of aerator devices that will move the fluid in two complementing circular vortexes as shown by the arrows in Figure 6. As shown, complementary circular vortexes flow in the same direction in the volumes of the pond in which the vortexes meet or are adjacent to eachother. As shown in the top view of Figure 5, the circular vortexes are parallel to the top surface of the aqueous medium in the containment vessel. For rectangular ponds having a length that is between 2.5 and 3 times the width, it is preferred to have the fluid moved by at least 3 aerator devices that will move the fluid in three complementing circlar vortexes as shown in Figure 7. As shown in Figures 6 and 7, the lighter areas are areas for which the flow rate is between from 4 cm/sec to 20 cm/sec. As shown in Fig 6 and 7, the dark areas 66 are areas that have a velocity less than 2 cm/sec or less. (Figure 7 shows the location of the aerator devices 88). The inventors have determined that the waste in the vessel will accumulate at the bottom of the vessel in the low or no velocity areas 66. To keep the vessel clean and healthy for the marine animals, it is recommended that this waste be removed routinely from the pond as often and regularly as possible. In plastic lined bottom ponds, it is recommended that this removal is done on a daily basis and in earthen bottom ponds it should be done at least once a week. By cleaning only the low velocity areas, most if not all of the waste from the pond can be efficiently removed from the vessel.

Additionally, to avoid wasting food, the food for the marine animals should not be added to the low velocity areas, and should only be added to the areas of the vessel that are between from 4 cm/sec to 20 cm/sec, more preferably from 4 cm/sec to 10 cm/sec when aeration devices that move the water are operational. Any food that lands in the low velocity areas will deplete the oxygen even more when it decomposes. Additionally to avoid wasting food, the aerator devices that move the fluid should be turned off preferably at least 5 minutes prior to feeding. By shutting off the aerators that move the fluid, the food will not be moved around by the fluid until it settles in the low velocity areas of the pond, which are where the dissolved oxygen levels are low and where the shrimp are not located. The feed is wasted in the low velocity areas and contributes to the poor aerobic pond conditions for shrimp. After allowing some time, preferably fifteen minutes to two hours for feeding, the aeration devices that move the fluid may be restarted.

The invention will be illustrated in more detail with reference to the following examples, but it should be understood that the present invention is not deemed to be limited thereto.

EXAMPLES

Example 1: Supplying Oxygen to Above-ground Tilipia Production Tank

A 7570 l (2000 gallon) tank for the production of tilipia fish is maintained at a temperature of approximately 28°C. The percentage of dissolved oxygen within the tank was 2.0 mg/liter.

A 7,36 kW (10 horsepower), portable vacuum swing absorption (VSA) oxygen generator provided by Air Products and Chemicals of Allentown, PA, was connected via an oxygen gas line to ceramic diffuser, oxygen injectors located at the bottom of the tank. The oxygen generator delivered oxygen having a purity of 90% or greater to the tank at a rate of 120 liters per minute or 250 SCFH at a pressure ranging from 0.21 to 0.34 bar (3 to 5 psi). The ceramic diffuser had a 3.4 bar (50 psi) backpressure. The oxygen generator was further connected to a 1 horsepower oxygen compressor to increase the output pressure from the oxygen generator to 4.1 bar (60 psi). The percentage of dissolved oxygen within the tank after 1 hour of being connected to the oxygen generator was 8.0 mg/liter.

The present invention illustrates that a portable VSA oxygen generator may increase the percentage of dissolved oxygen within the tilipia production tank. Unlike previous methods of injecting oxygen within the tank, such as a liquid oxygen supply tank system, the use of the portable VSA oxygen generator provides an amount of oxygen to the production tank at a fraction of the monthly operating costs of using a liquid oxygen supply tank system. For example, the operating costs for the portably VSA oxygen generator was $280 per month versus $1,500 per month for the liquid oxygen supply system based on a price of $0.06 per kW. The cost for the liquid oxygen supply system was exclusive of costs associated with oxygen tank rental and management of oxygen supply. Further, unlike prior art methods such as aeration, the user is limited to the amount of marine animals that can be stocked in the tank.

The present invention has been set forth with regard to several preferred embodiments, but the scope of the present invention is considered to be broader than those embodiments and should be ascertained from the claims below.

**Claims**

1. A system (10) of providing a gas comprising oxygen at a purity of 30% or greater by volume for the aquafarming of marine animals comprising: 20-1000 containment vessels (20), each of said containment vessels (20) capable of containing a plurality of marine animals and an aqueous medium (50); a plurality of oxygen injectors (30), at least one oxygen injector (30) disposed in at least one location of each of said containment vessels (20); and a plurality of oxygen generators (40) of said gas, wherein the number of said containment (20) vessels are between 0.25 and 8 times the number of oxygen generators (40) in the system (10); each of said plurality of oxygen generators (40) are in fluid communication with at least one of said plurality of oxygen injectors (30) whereby the plurality of oxygen generators (40) provides the containment vessels (20) with an amount of oxygen sufficient to increase the percentage of dissolved oxygen within the aqueous medium ; wherein said oxygen generators (40) are located proximally to said containment vessels (20) or are disposed within the containment vessel they provide oxygen to.

2. The system of claim 1 further comprising a food source in fluid communication with at least one of said plurality of oxygen injectors.

3. The system of claim 2 further comprising a medicine source in fluid communication with at least one of said plurality of oxygen injectors (30).

4. The system of claim 1 further comprising an ozone source in fluid communication with the at least one of said plurality of oxygen injectors (30).

5. The system of claim 4 wherein the ozone source is in fluid communication with at least one of said plurality of oxygen generators (40).

6. The system of claim 1 wherein said plurality of oxygen generators operates (40) via vacuum swing absorption.

7. The system of claim 1 wherein at least one of said plurality of oxygen generators (40) is mounted on wheels (402).

8. The system of claim 1 wherein at least one of said plurality of oxygen generators (40) is mounted onto a floatable support (401, 402).

9. The system of claim 1 wherein the dissolved oxygen content in said aqueous medium (50) is greater than 4 mg/l.

10. The system of claim 1, wherein more oxygen is added via said oxygen injectors (30) to said containment vessels (20) at night than during the day.

11. The system of claim 1 further comprising:

    a sensor (702) for measuring the content of dissolved oxygen $C_o$ within the aqueous medium in at least one of said plurality of containment vessels (20); and
    a central processing unit (701) in electrical communication with the sensor (702) and at least one of said plurality of oxygen generators (40) wherein the central processing unit (701) compares the oxygen content $C_o$ against a set point value $C_{set}$ and activates the at least one oxygen generator when the oxygen content $C_o$ is below set point value $C_{set}$.

12. The system of claim 1 wherein the at least one containment vessel comprises a plurality of shrimp having a shrimp biomass density at harvest of at least 0.5 kg/m$^2$ or greater.

13. The system of claim 1, further wherein each of said oxygen generators (40) acts as a primary supplier of said gas to at least one containment vessel (20) and a backup supplier of said gas to at least one other containment vessel (20).

14. The system of claim 1 wherein said aqueous medium (50) comprises a to surface and wherein in said plurality of containment vessels (20) said aqueous medium (50) moves in at least one circular vortex parallel to said top surface.

15. The system of claim 1 wherein said aqueous medium (50) comprises a top surface and wherein in said plurality of containment vessels (20) the majority of said aqueous medium (50) moves in at least two complementary circular vortexes parallel to said top surface.

16. The system of claim 1, wherein the majority of said aqueous medium (50) moves at at least 4 cm/sec.

**17.** The system of claim 1, wherein said containment vessels (20) further comprise a radius or a length, and said plurality of oxygen injectors (30) are located across said radius or half of said length of said containment vessel (20).

**18.** The system of claim 26, further wherein said aqueous medium (50) comprises a top surface and said aqueous medium moves in at least one circular vortex parallel to said top surface.

**19.** The system of claim 1 wherein each of said containment vessels (20) comprises a bottom and sludge, wherein said sludge collects in an area that is less than 20% of the area bottom.

**Patentansprüche**

**1.** System (10) für die Bereitstellung von Gas, umfassend Sauerstoff mit einer Reinheit von 30 Vol.-% oder mehr zum Aquafarming bzw. zur Unterwasseraufzucht von Meerestieren, umfassend 20-1000 Aufbewahrungsgefäße (20), wobei jedes Aufbewahrungsgefäß (20) in der Lage ist, eine Vielzahl von Meerestieren und ein wässeriges Medium (50) zu enthalten; eine Vielzahl von Sauerstoffinjektoren (30), wobei mindestens ein Sauerstoffinjektor (30) an mindestens einer Stelle jedes Aufbewahrungsgefäßes (20) vorhanden ist; und eine Vielzahl von Sauerstoffgeneratoren (40) des Gases, wobei die Zahl der Aufbewahrungsgefäße (20) zwischen 0,25 und 8mal die Zahl der Sauerstoffgeneratoren (40) im System (10) beträgt; wobei jeder der Vielzahl von Sauerstoffgeneratoren (40) in Fluidverbindung mit mindestens einem der Vielzahl von Sauerstoffinjektoren (30) steht, wobei die Vielzahl von Sauerstoffgeneratoren (40) die Aufbewahrungsgefäße (20) mit einer Menge an Sauerstoff versorgen, die ausreicht, um den Prozentsatz an in dem wässerigen Medium gelösten Sauerstoff zu erhöhen; wobei die Sauerstoffgeneratoren (40) in der Nähe der Aufbewahrungsgefäße (20) oder innerhalb des Aufbewahrungsgefäßes, das sie mit Sauerstoff versorgen, angeordnet sind.

**2.** System nach Anspruch 1, weiterhin umfassend eine Nahrungsquelle in Fluidverbindung mit mindestens einem der Vielzahl von Sauerstoffinjektoren.

**3.** System nach Anspruch 2, weiterhin umfassend eine Medizinquelle in Fluidverbindung mit mindestens einem der Vielzahl von Sauerstoffinjektoren (30).

**4.** System nach Anspruch 1, weiterhin umfassend eine Ozonquelle in Fluidverbindung mit mindestens einem der Vielzahl von Sauerstoffinjektoren (30).

**5.** System nach Anspruch 4, worin die Ozonquelle sich in Fluidverbindung mit mindestens einem der Vielzahl von Sauerstoffgeneratoren (40) befindet.

**6.** System nach Anspruch 1, worin die Vielzahl von Sauerstoffgeneratoren (40) über Vakuum-Schwungabsorption funktionieren.

**7.** System nach Anspruch 1, worin mindestens einer der Vielzahl von Sauerstoffgeneratoren (40) auf Rädern (402) montiert ist.

**8.** System nach Anspruch 1, worin mindestens einer der Vielzahl von Sauerstoffgeneratoren (40) auf einem schwimmfähigen Träger (401, 402) montiert ist.

**9.** System nach Anspruch 1, worin der Gehalt an gelöstem Sauerstoff im wässerigen Medium (50) größer als 4 mg/l ist.

**10.** System nach Anspruch 1, worin bei Nacht mehr Sauerstoff über die Sauerstoffinjektoren (30) an die Aufbewahrungsgefäße (20) zugeführt wird als während des Tages.

**11.** System nach Anspruch 1, weiterhin umfassend:

einen Sensor (702) zur Messung des Gehalts an gelöstem Sauerstoff $C_0$ in dem wässerigen Medium in mindestens einem der Vielzahl von Aufbewahrungsgefäßen (20); und
eine zentrale Verarbeitungseinheit (701) in elektrischer Verbindung mit dem Sensor (702) und mit mindestens einem der Vielzahl von Sauerstoffgeneratoren (40), wobei die zentrale Verarbeitungseinheit (701) den Sauerstoffgehalt $C_0$ mit einem gesetzten Wert $C_{set}$ vergleicht, und den mindestens einen Sauerstoffgenerator aktiviert, wenn der Sauerstoffgehalt $C_0$ unter den gesetzten Wert $C_{set}$ fällt.

**12.** System nach Anspruch 1, worin das mindestens eine Aufbewahrungsgefäß eine Vielzahl von Shrimps umfasst, wobei die Schrimps-Biomassendichte beim Abernten mindestens $0,5 \text{ kg/m}^2$ oder mehr beträgt.

**13.** System nach Anspruch 1, worin weiterhin jeder der Sauerstoffgeneratoren (40) als primärer Versorger des Gases zu mindestens einem Aufbewahrungsgefäß (20) und als ein Backupversorger des Gases für mindestens ein weiteres Aufbewahrungsgefäß (20) dient.

**14.** System nach Anspruch 1, worin das wässerige Medium (50) eine obere Oberfläche aufweist und wobei sich das wässerige Medium (50) in der Vielzahl von Aufbewahrungsgefäßen (20) in mindestens einem zirkularen Wirbel parallel zur oberen Oberfläche bewegt.

**15.** System nach Anspruch 1, worin das wässerige Medium (50) eine obere Oberfläche aufweist und wobei sich das wässerige Medium (50) in der Vielzahl von Aufbewahrungsgefäßen (20) in mindestens zwei komplementären zirkularen Wirbeln parallel zur oberen Oberfläche bewegt.

**16.** System nach Anspruch 1, worin die Hauptmenge des wässerigen Mediums (50) sich mit mindestens 4 cm/sec bewegt.

**17.** System nach Anspruch 1, worin das Aufbewahrungsgefäß (20) weiterhin einen Radius oder eine Länge aufweist, und die Vielzahl von Sauerstoffinjektoren (30) über dem Radius oder der Hälfte der Länge des Aufbewahrungsgefäßes (20) angeordnet sind.

**18.** System nach Anspruch 26, worin weiterhin das wässerige Medium (50) eine obere Oberfläche aufweist und das wässerige Medium sich in mindestens einem zirkularen Wirbel parallel zur oberen Oberfläche bewegt.

**19.** System nach Anspruch 1, worin jedes der Aufbewahrungsgefäße (20) einen Bodensatzschlamm aufweist, wobei der Schlamm sich in einem Gebiet ansammelt, das weniger als 20% des Bodenbereichs ausmacht.

**Revendications**

**1.** Système (10) de fourniture d'un gaz comprenant de l'oxygène à une pureté de 30 % ou plus en volume pour l'aquaculture d'animaux marins comprenant 20 à 1 000 cuves de confinement (20), chacune desdites cuves de confinement (20) étant capable de contenir une pluralité d'animaux marins et un milieu aqueux (50) ; une pluralité d'injecteurs d'oxygène (30), au moins un injecteur d'oxygène (30) étant disposé dans au moins un emplacement de chacune desdites cuves de confinement (20) ; et une pluralité de générateurs d'oxygène (40) dudit gaz, où le nombre desdites cuves de confinement (20) est entre 0,25 et 8 fois le nombre de générateurs d'oxygène (40) dans le système (10) ; chacun de ladite pluralité de générateurs d'oxygène (40) étant en communication fluide avec au moins l'un de ladite pluralité d'injecteurs d'oxygène (30), moyennant quoi la pluralité de générateurs d'oxygène (40) fournit aux cuves de confinement (20) une quantité d'oxygène suffisante pour augmenter le pourcentage d'oxygène dissous au sein du milieu aqueux ; où lesdits générateurs d'oxygène (40) sont situés à proximité desdites cuves de confinement (20) ou sont disposés au sein de la cuve de confinement qu'ils fournissent en oxygène.

**2.** Système selon la revendication 1, comprenant en outre une source d'aliments en communication fluide avec au moins l'un de ladite pluralité d'injecteurs d'oxygène.

**3.** Système selon la revendication 2, comprenant en outre une source de médicaments en communication fluide avec au moins l'un de ladite pluralité d'injecteurs d'oxygène (30).

**4.** Système selon la revendication 1, comprenant en outre une source d'ozone en communication fluide avec au moins l'un de ladite pluralité d'injecteurs d'oxygène (30).

**5.** Système selon la revendication 4, dans lequel la source d'ozone est en communication fluide avec au moins l'un de ladite pluralité de générateurs d'oxygène (40).

**6.** Système selon la revendication 1, dans lequel ladite pluralité de générateurs d'oxygène (40) fonctionne via une absorption modulée sous vide.

**7.** Système selon la revendication 1, dans lequel au moins l'un de ladite pluralité de générateurs d'oxygène (40) est monté sur des roues (402).

**8.** Système selon la revendication 1, dans lequel au moins l'un de ladite pluralité de générateurs d'oxygène (40) est monté sur un support flottant (401, 402).

**9.** Système selon la revendication 1, dans lequel la teneur en oxygène dissous dans ledit milieu aqueux (50) est supérieure à 4 mg/L.

**10.** Système selon la revendication 1, dans lequel plus d'oxygène est ajouté via lesdits injecteurs d'oxygène (30) auxdites cuves de confinement (20) pendant la nuit que pendant le jour.

**11.** Système selon la revendication 1, comprenant en outre :

un capteur (702) destiné à mesurer la teneur en oxygène dissous $C_0$ au sein du milieu aqueux dans au moins l'une de ladite pluralité de cuves de confinement (20) ; et
une unité centrale (701) en communication électrique avec ledit capteur (702) et au moins l'un de ladite pluralité de générateurs d'oxygène (40) dans lesquels l'unité centrale (701) compare la teneur en oxygène $C_0$ à une valeur de point de

consigne $C_{set}$ et active le au moins un générateur d'oxygène lorsque la teneur en oxygène $C_0$ est en dessous de la valeur de point de consigne $C_{set}$.

12. Système selon la revendication 1, dans lequel la au moins une cuve de confinement comprend une pluralité de crevettes ayant une densité de biomasse de crevettes à la récolte d'au moins 0,5 kg/m$^2$ ou plus.

13. Système selon la revendication 1, dans lequel chacun desdits générateurs d'oxygène (40) agit en outre comme un fournisseur principal dudit gaz à ladite au moins une cuve de confinement (20) et un fournisseur de réserve dudit gaz à au moins une autre cuve de confinement (20).

14. Système selon la revendication 1, dans lequel ledit milieu aqueux (50) comprend une surface supérieure et dans lequel dans ladite pluralité de cuves de confinement (20), ledit milieu aqueux (50) se déplace dans au moins un tourbillon circulaire parallèle à ladite surface supérieure.

15. Système selon la revendication 1, dans lequel ledit milieu aqueux (50) comprend une surface supérieure et dans lequel dans ladite pluralité de cuves de confinement (20), la majorité dudit milieu aqueux (50) se déplace dans au moins deux tourbillons circulaires complémentaires parallèles à ladite surface supérieure.

16. Système selon la revendication 1, dans lequel la majorité dudit milieu aqueux (50) se déplace à au moins 4 cm/s.

17. Système selon la revendication 1, dans lequel lesdites cuves de confinement (20) comprennent en outre un rayon ou une longueur, et ladite pluralité d'injecteurs d'oxygène (30) est située à travers ledit rayon ou la moitié de ladite longueur de ladite cuve de confinement (20).

18. Système selon la revendication 16, dans lequel ledit milieu aqueux (50) comprend en outre une surface supérieure et ledit milieu aqueux se déplace dans au moins un tourbillon circulaire parallèle à ladite surface supérieure.

19. Système selon la revendication 1, dans lequel chacune desdites cuves de confinement (20) comprend un fond et de la boue, dans lequel ladite boue se collecte dans une zone qui est à moins de 20 % de la surface du fond.

Daily Variation of Dissolved Oxygen in a Pond

FIG. 1

FIG. 2

FIG. 3

EP 1 425 963 B1

FIG. 4

FIG. 5

FIG. 6